# EUROPEAN PATENT APPLICATION

(11) **EP 4 132 095 A1**
(43) Date of publication of application: **08.02.2023**
(21) Application number: 21780404.6
(22) Date of filing: 26.03.2021
(51) Int. Cl.: H04W 36/00

(54) **CELL HANDOVER METHOD, CELL HANDOVER PROCESSING METHOD, TERMINAL, AND NETWORK DEVICE**

(30) Priority: 02.04.2020 CN 202010256763
(71) Applicant: Vivo Mobile Communication Co., Ltd., Dongguan, Guangdong 523863 (CN)
(72) Inventor: KIMBA DIT ADAMOU, Boubacar, Dongguan, Guangdong 523863 (CN)
(74) Representative: Raffay & Fleck
(86) International application number: PCT/CN2021/083216
(87) International publication number: WO 2021/197219

(57) **Abstract**

The present invention provides a cell handover method, a cell handover processing method, a terminal, and a network device. The method comprises: receiving a handover command sent by a first network node, the handover command comprising first slice information, the first slice information being used for indicating N slices, N being a positive integer; and sending a random access request to a target slice of a target cell, the target slice being one slice among the N slices.

## Description

### CROSS-REFERENCE TO RELATED APPLICATIONS

This application claims priority to Chinese Patent Application No. 202010256763.8 filed in China on April 2, 2020, which is incorporated herein by reference in its entirety.

### TECHNICAL FIELD

The present invention relates to the field of communications technologies, and in particular, to a cell handover method, a cell handover processing method, a terminal, and a network device.

### BACKGROUND

In the New Radio (New Radio, NR) system, a network slice (slice) function is proposed for cells. A plurality of "virtual" end-to-end networks can be segmented by the operator on a hardware infrastructure by using the network slice technology. Each segmented virtual network is completely logically isolated from the device to the access network, from the access network to the core network, and from the core network to the transmission network, and adapts to technical requirements of services thereof. During the cell handover process, the current network handover function can only be used to hand over one terminal to another cell, but cannot hand over the terminal to a radio access network (Radio Access Network, RAN) slice required for the terminal. In this way, after the handover, the terminal needs to further select or be handed over to the RAN slice required for the terminal. As a result, the terminal service is interrupted. Therefore, the prior art has the problem that the reliability of the terminal service is relatively low during the cell handover process.

### SUMMARY

Embodiments of the present invention provide a cell handover method, a cell handover processing method, a terminal, and a network device to resolve the problem that the reliability of the terminal service is relatively low during the cell handover process.

According to a first aspect, an embodiment of the present invention provides a cell handover method, applied to a terminal and including:
receiving a handover command sent by a first network node, where the handover command includes first slice information, the first slice information is used to indicate N slices, and N is a positive integer; and
sending a random access request to a target slice of a target cell, where the target slice is one of the N slices.

According to a second aspect, an embodiment of the present invention provides a cell handover processing method, applied to a first network node and including:
sending a handover command to a terminal, where the handover command includes first slice information, the first slice information is used to indicate N slices, the N slices are used for the terminal to send a random access request, and N is a positive integer.

According to a third aspect, an embodiment of the present invention provides a cell handover processing method, applied to a second network node and including:
receiving a handover request message sent by a first network node, where the handover request message carries a part or all slice information in third slice information, and the third slice information is slice information associated with a measurement result in a measurement report that is sent by a terminal and that is received by the first network node; and
sending a handover request response message to the second network node, where
in a case that the handover response request message carries fourth slice information, the handover response request message is used to instruct the first network node to send a handover command to the terminal based on the fourth slice information.

According to a fourth aspect, an embodiment of the present invention provides a terminal, including:
a first receiving module, configured to receive a handover command sent by a first network node, where the handover command includes first slice information, the first slice information is used to indicate N slices, and N is a positive integer; and
a first sending module, configured to send a random access request to a target slice of a target cell, where the target slice is one of the N slices.

According to a fifth aspect, an embodiment of the present invention provides a network device, where the network device is a first network node and includes:
a second sending module, configured to send a handover command to a terminal, where the handover command includes first slice information, the first slice information is used to indicate N slices, the N slices are used for the terminal to send a random access request, and N is a positive integer.

According to a sixth aspect, an embodiment of the present invention provides a network device, where the network device is a second network node and includes:
a second receiving module, configured to receive a handover request message sent by a first network node, where the handover request message carries a part or all slice information in third slice information, and the third slice information is slice information associated with a measurement result in a measurement report that is sent by a terminal and that is received by the first network node; and
a third sending module, configured to send a handover request response message to the second network node, where
in a case that the handover response request message carries fourth slice information, the handover response request message is used to instruct the first network node to send a handover command to the terminal based on the fourth slice information.

According to a seventh aspect, an embodiment of the present invention provides a terminal, including a processor, a memory, and a program stored in the memory and executable on the processor, and when the program is executed by the processor, steps of the cell handover method are implemented.

According to an eighth aspect, an embodiment of the present invention provides a network device, including a processor, a memory, and a program stored in the memory and executable on the processor, and when the program is executed by the processor, steps of the cell handover method are implemented.

According to a ninth aspect, an embodiment of the present invention provides a computer-readable storage medium, where the computer-readable storage medium stores a computer program, and when the computer program is executed by a processor, steps of the cell handover method are implemented, or when the computer program is executed by a processor, steps of the cell handover processing method are implemented.

In the embodiments of the present invention, since the handover command carries the first slice information, a random access request may be initiated to the target slice of the target cell based on the first slice information. In this way, the terminal may be handed over to the RAN slice required for the terminal during the cell handover process. Therefore, in the embodiments of the present invention, during the cell handover process, the service of the terminal can be prevented from being affected or interrupted due to the slice, and the reliability of the service is improved.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a structural diagram of a network system to which the embodiments of the present invention can be applied;
FIG. 2 is a flowchart of a cell handover method according to an embodiment of the present invention;
FIG. 3 is a flowchart of a cell handover processing method according to an embodiment of the present invention;
FIG. 4 is a flowchart of another cell handover processing method according to an embodiment of the present invention;
FIG. 5 is a structural diagram of a terminal according to an embodiment of the present invention;
FIG. 6 is a structural diagram of a network device according to an embodiment of the present invention;
FIG. 7 is a structural diagram of another network device according to an embodiment of the present invention;
FIG. 8 is a structural diagram of another terminal according to an embodiment of the present invention; and
FIG. 9 is a structural diagram of still another network device according to an embodiment of the present invention.

### DESCRIPTION OF EMBODIMENTS

The following clearly and completely describes the technical solutions in the embodiments of the present application with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

The term "comprise/include" and any other variants in the description and the claims of this application mean to cover the non-exclusive inclusion, for example, a process, method, system, product, or device that includes a list of steps or units and is not necessarily limited to those steps or units, but may include other steps or units not expressly listed or inherent to such a process, method, product, or device. In addition, "and/or" used in the description and the claims means at least one of the connected objects. For example, A and/or B represents the following three cases: Only A exists, only B exists, and both A and B exist.

In the embodiments of the present invention, the word such as "example" or "for example" is used to represent giving an example, an illustration, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

The embodiments of the present invention are described below in conjunction with the accompanying drawings. A cell handover method, a cell handover processing method, a terminal, and a network device provided in the embodiments of the present invention may be applied to a wireless communication system. The wireless communication system may be a 5G system, an evolved long term evolution (evolved Long Term Evolution, eLTE) system, or a subsequent evolved communications system.

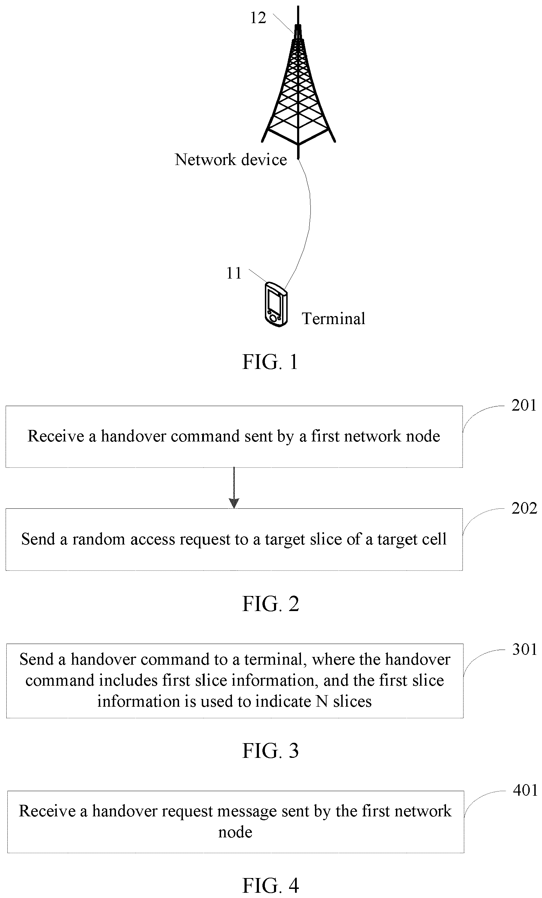

Referring to FIG. 1, FIG. 1 is a structural diagram of a network system to which the embodiments of the present invention can be applied. As shown in FIG. 1, the network system includes a terminal 11 and a network device 12. The terminal 11 may be a user terminal or another terminal side device, for example, a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device). It should be noted that a specific type of the terminal 11 is not limited in the embodiments of the present invention. The network device 12 may be a 5G base station, a base station of a later version, or a base station in another communications system, or may be referred to as a NodeB, an evolved NodeB, a transmission reception point (Transmission Reception Point, TRP), an access point (Access Point, AP), or another word in the field. The network device is not limited to a specific technical term provided that a same technical effect is achieved. In addition, the network device 12 may be a master node (Master Node, MN) or a secondary node (Secondary Node, SN). It should be noted that in the embodiments of the present invention, only the 5G base station is used as an example, but a specific type of the network device is not limited.

Referring to FIG. 2, FIG. 2 is a flowchart of a cell handover method according to an embodiment of the present invention. The method is applied to a terminal. As shown in FIG. 2, the method includes the following steps.

Step 201. Receive a handover (HO) command sent by a first network node, where the handover command includes first slice information, the first slice information is used to indicate N slices, and N is a positive integer.

Step 202. Send a random access request to a target slice of a target cell, where the target slice is one of the N slices.

In this embodiment, the first network node may be understood as a source network device corresponding to a source access cell of the terminal during the handover process. Specifically, the first network node may send the handover command to the terminal, so that the terminal is handed over from a cell of the first network node to a specified slice of a cell corresponding to the second network node. The specified slice is any one of the N slices, and the N slices can understand as slices to which the terminal can be handed over.

The target cell is a cell corresponding to the second network node, that is, a neighboring cell to which the terminal needs to be handed over during the handover process. The target cell may be a cell specified by the first network node, or may be a cell determined by the terminal.

In the embodiments of the present invention, since the handover command carries the first slice information, a random access request may be initiated to the target slice of the target cell based on the first slice information. In this way, the terminal may be handed over to the RAN slice required for the terminal during the cell handover process. Therefore, in the embodiments of the present invention, during the cell handover process, the service of the terminal can be prevented from being affected or interrupted due to the slice, and the reliability of the service is improved.

Optionally, the handover command further includes a random access channel (Random Access Channel, RACH) resource associated with each of the N slices.

It should be understood that in this embodiment, in a case that the first network node indicates the RACH resource associated with the slice, when a random access request is sent to a specific slice of the target cell, the random access request may be sent on the RACH resource associated with the slice. In other words, the sending a random access request to a target slice of a target cell includes:
sending the random access request to the target slice of the target cell based on an RACH resource associated with the target slice.

Optionally, in an embodiment, the terminal may determine the target cell based on a measurement result of the cell.

In another embodiment, the first network node may indicate one or more cells, and the terminal determines the target cell in the one or more cells indicated by the first network node. For example, the handover command further includes M cells associated with the N slices, the target cell is one of the M cells, and M is a positive integer.

An association relationship between the N slices and the M cells satisfies at least one of the following:
one slice is associated with M1 cells, where M1 is a positive integer less than or equal to M; and

N1 slices are associated with one cell, where N1 is a positive integer less than or equal to N.

In this embodiment, N may be set based on actual needs. For example, when N is equal to 1, that is, the first slice information indicates a slice 1, the slice 1 may be associated with M cells. In other words, each of the M cells includes the slice 1, and the terminal can successfully access a slice 1 of any cell by sending a random access request.

For example, when N is equal to 3, that is, the first slice information indicates a slice 1, a slice 2, and a slice 3, the slice 1 may be associated with one or more of the M cells, the slice 2 may be associated with one or more of the M cells, and the slice 3 may be associated with one or more of the M cells. In addition, the slice 1 and the slice 2 may be associated with a same cell. It is assumed that M is 3, the M cells include a cell 1, a cell 2, and a cell 3. An association relationship between the 3 slices and the 3 cells may include the following cases.
Case 1: the slice 1 is associated with the cell 1, the slice 2 is associated with the cell 2, and the slice 3 is associated with the cell 3.
Case 2: the slice 1 is associated with the cell 1 and the cell 2, the slice 2 is associated with the cell 2, and the slice 3 is associated with the cell 3. In other words, the slice 1 is associated with the cell 1, the slice 1 and the slice 2 are associated with the cell 2, and the slice 3 is associated with the cell 3.
Case 3: the slice 1 and the slice 2 are associated with the cell 1, the slice 1 and the slice 3 are associated with the cell 2, and the slice 2 and the slice 3 are associated with the cell 3.

Certainly, in other embodiments, other forms may also be adopted for the association manner between the 3 slices and the 3 cells, which are not listed one by one herein.

It should be noted that slices associated with the M1 cells may use the same RACH resource, and for example, the slices associated with the M1 cells are associated with the same RACH resource. Similarly, the N1 slices may use the same RACH resource, and for example, the N1 slices are associated with the same RACH resource.

Further, before the receiving a handover command sent by a first network node, the method further includes:
receiving a handover measurement configuration, where the handover measurement configuration is used to indicate second slice information to be measured;
in a case that measurement conditions are met, performing measurement based on the handover measurement configuration, and obtaining a measurement result; and
sending a measurement report to a network device, where the measurement report carries the measurement result and third slice information, and the third slice information is slice information associated with the measurement result in the second slice information.

In this embodiment of the present invention, the first network node may send the handover measurement configuration to notify the terminal of the second slice information that needs to be measured. For example, the second slice information may be indicated in a measurement object, and in an embodiment, a quantity of slices included in the second slice information may also be indicated.

The second slice information includes any one of the following:
measured slice information;
measured slice information of a first cell; and
measured slice information of a first frequency.

In other words, in this embodiment, the first network node may only indicate slice information to be measured, or slice information to be measured in a specific cell, or slice information to be measured at a specific frequency.

After receiving the handover measurement configuration, the terminal may perform handover measurement based on a measurement parameter of the handover measurement configuration when the measurement conditions are met to trigger the handover measurement, where the measurement parameter includes the second slice information. In this embodiment, a corresponding measurement value may be obtained by performing measurement on each slice. A corresponding measurement result is reported based on the measurement value. For example, measurement results corresponding to all slices may be reported, and measurement results corresponding to slices that satisfy the handover condition may also be reported.

The third slice information may include at least one of the following:
slice information of a second cell; and
slice information of a second frequency.

In an embodiment, if the third slice information includes slice information corresponding to the slice 1 of the second cell, it can be understood that the slice 1 of the second cell is reported in the measurement report.

In another embodiment, if the third slice information includes slice information corresponding to the slice 2 of the second frequency, it can be understood that the slice 2 of the second frequency is reported in the measurement report.

In still another embodiment, if the third slice information includes slice information corresponding to the slice 1 of the second cell and slice information corresponding to the slice 1 of the second frequency, it can be understood that the slice 1 of the second frequency of the second cell is reported in the measurement report.

Optionally, after receiving the measurement report, the first network node may send a handover request message to a second network node, where the handover request message carries a part or all of slice information in the third slice information;
receive a handover request response message sent by the second network node; and
send a handover command to the terminal in a case that the handover response request message carries fourth slice information, where
the fourth slice information includes slice information that the second network node allows the terminal to access.

Optionally, the fourth slice information includes at least one of the following:
a part or all of slice information in the slice information carried in the handover request message; and
in addition to the slice information carried in the handover request message, slice information recommended by the second network node.

In this embodiment, the handover response request message may include two cases: agreeing to the handover request and rejecting the handover request. In a case that the second network node agrees to the handover request, the handover response request message sent by the second network node carries the fourth slice information, and in a case that the second network node rejects the handover request, the handover response request message sent by the second network node may carry a rejection reason.

Further, in the case that the second network node agrees to the handover request, the handover response request message sent by the second network node may further carry the RACH resource associated with the slice in the fourth slice information. The first network node determines whether to send a handover command based on the handover response request message, and the content of the handover command. In a case that the handover response request message carries the RACH resource, the handover command may carry the RACH resource indicated by the second network node. In the case that the second network node rejects the handover request, the first network node does not send the handover command.

To better understand the present invention, the process of the terminal performing cell handover in a connected state in the cell 1 of the first network node is described in detail below.

The first network node may configure the terminal to perform the handover measurement configuration. In the measurement configuration of the terminal, the first network node may configure the terminal to measure slice related information, such as instructing, in measurement objects (measurement objects), the terminal to measure any of the following:
slice information;
measuring slice information of a specific cell (cell); and
measuring slice information at a specific frequency.

Optionally, the slice related information may include the quantity of slices.

When the triggered measurement conditions are met, the terminal configures a measurement parameter based on the first network node, performs measurement, and reports a measurement result to the first network node. The measurement parameter may include a slice parameter, and the measurement report of the terminal may include any one of the following:
a cell and corresponding slice information;
a frequency and corresponding slice information; and
a frequency and a cell and corresponding slice information.

The terminal may report the slice related information as follows:
adding corresponding slice information to the measurement result (measResult), and the quantity of slices may also be included; and
adding slice information to other information in the measurement report, and the quantity of slices may also be included.

When the first network node receives the measurement result reported by the terminal, the first network node may add the slice information to the handover request message, and send the handover request message to the second network node. For example, the slice information added in the handover request message may include any one of the following:
one cell and one piece of slice information;
one cell and a plurality of pieces of slice information;
a plurality of cells and a same piece of slice information; and
a plurality of cells and a plurality of pieces of slice information.

An association relationship between the plurality of cells and the plurality of pieces of slice information may include at least one of the following:
one cell and a plurality of pieces of slice information; and
one slice and a plurality of pieces of cell information.

Based on the handover request information sent by the first network node, decisions of the second network node may include:
rejecting the handover request and feeding it back to the first network node, where the rejecting handover request may include the reason why a specific slice is not supported to be handed over; and
agreeing to the handover request, where related resources to accept UE is prepared and fed back to the first network node. The related resources to accept UE include: a slice-based RACH resource. For example, a random access preamble.

When the first network node receives handover approval feedback sent by the second network node, the first network node sends a handover command to the terminal. The handover command may include:
one cell and one piece of slice information and a corresponding slice-based RACH resource;
one cell and a plurality of pieces of slice information and a corresponding slice-based RACH resource;
a plurality of cells and one piece of slice information and a corresponding slice-based RACH resource; and
a plurality of cells and a plurality of pieces of slice information and a corresponding slice-based RACH resource.

The plurality of cells and the plurality of pieces of slice information and the corresponding slice-based RACH resource may include at least one of the following:
one cell and a plurality of pieces of slice information and a same RACH resource;
one slice and a plurality of pieces of cell information and a same RACH resource;
one cell and a plurality of pieces of slice information and a plurality of RACH resources; and
one slice and a plurality of pieces of cell information and a plurality of RACH resources.

If the handover command includes the corresponding slice-based RACH resource, the terminal initiates an RACH in the target cell of the second network node based on the corresponding RACH resource of the slice.

Referring to FIG. 3, FIG. 3 is a flowchart of a cell handover processing method according to an embodiment of the present invention. The method is applied to a first network node. As shown in FIG. 3, the method includes the following steps.

Step 301. Send a handover command to a terminal, where the handover command includes first slice information, the first slice information is used to indicate N slices, the N slices are used for the terminal to send a random access request, and N is a positive integer.

Optionally, the handover command further includes an RACH resource associated with each of the N slices.

Optionally, the handover command further includes M cells associated with the N slices, and M is a positive integer.

Optionally, an association relationship between the N slices and the M cells satisfies at least one of the following:
one slice is associated with M1 cells, where M1 is a positive integer less than or equal to M; and
N1 slices are associated with one cell, where N1 is a positive integer less than or equal to N.

Optionally, slices associated with the M1 cells are associated with a same RACH resource.

Optionally, the N1 slices are associated with a same RACH resource.

Optionally, before the sending a handover command to a terminal, the method further includes:
sending a handover measurement configuration to the terminal, where the handover measurement configuration is used to indicate second slice information to be measured; and
receiving a measurement report sent by the terminal based on the handover measurement configuration, where the measurement report carries a measurement result obtained by performing measurement based on the handover measurement configuration and third slice information, and the third slice information is slice information associated with the measurement result in the second slice information.

Optionally, the second slice information includes any one of the following:
measured slice information;
measured slice information of a first cell; and
measured slice information of a first frequency.

Optionally, the third slice information includes at least one of the following:
slice information of a second cell; and
slice information of a second frequency.

Optionally, before the sending a handover command to a terminal, the method further includes:
sending a handover request message to a second network node, where the handover request message carries a part or all of slice information in the third slice information;
receiving a handover request response message sent by the second network node; and
sending a handover command to the terminal in a case that the handover response request message carries fourth slice information, where
the fourth slice information includes slice information that the second network node allows the terminal to access.

Optionally, the fourth slice information includes at least one of the following:
a part or all of slice information in the slice information carried in the handover request message; and
in addition to the slice information carried in the handover request message, slice information recommended by the second network node.

It should be noted that this embodiment is used as an implementation of a first network node corresponding to the embodiment shown in FIG. 2. For a specific implementation of this embodiment, refer to related descriptions of the embodiment shown in FIG. 2, and a same beneficial effect can be achieved. To avoid repetition, details are not described herein again.

Referring to FIG. 4, FIG. 4 is a flowchart of another cell handover processing method according to an embodiment of the present invention. The method is applied to a second network node. As shown in FIG. 4, the method includes the following steps.

Step 401. Receive a handover request message sent by a first network node, where the handover request message carries a part or all slice information in third slice information, and the third slice information is slice information associated with a measurement result in a measurement report that is sent by a terminal and that is received by the first network node; and

Send a handover request response message to the second network node, where
in a case that the handover response request message carries fourth slice information, the handover response request message is used to instruct the first network node to send a handover command to the terminal based on the fourth slice information.

Optionally, the fourth slice information includes at least one of the following:
a part or all of slice information in the slice information carried in the handover request message; and
in addition to the slice information carried in the handover request message, slice information recommended by the second network node.

It should be noted that this embodiment is used as an implementation of a second network node corresponding to the embodiment shown in FIG. 3. For a specific implementation of this embodiment, refer to related descriptions of the embodiment shown in FIG. 3, and a same beneficial effect can be achieved. To avoid repetition, details are not described herein again.

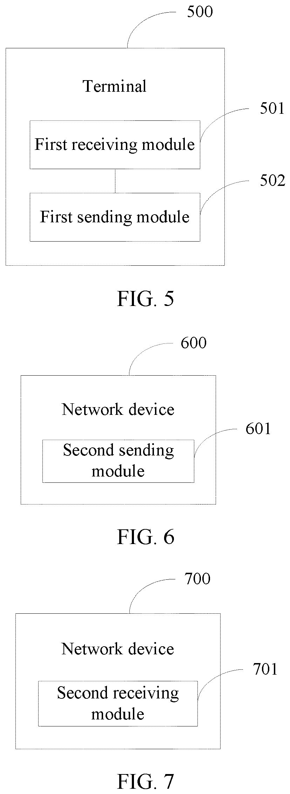

Referring to FIG. 5, FIG. 5 is a structural diagram of a terminal according to an embodiment of the present invention. As shown in FIG. 5, a terminal 500 includes:
a first receiving module 501, configured to receive a handover command sent by a first network node, where the handover command includes first slice information, the first slice information is used to indicate N slices, and N is a positive integer; and
a first sending module 502, configured to send a random access request to a target slice of a target cell, where the target slice is one of the N slices.

Optionally, the handover command further includes a random access channel (RACH) resource associated with each of the N slices.

Optionally, the first sending module 502 is specifically configured to send the random access request to the target slice of the target cell based on an RACH resource associated with the target slice.

Optionally, the handover command further includes M cells associated with the N slices, the target cell is one of the M cells, and M is a positive integer.

Optionally, an association relationship between the N slices and the M cells satisfies at least one of the following:
one slice is associated with M1 cells, where M1 is a positive integer less than or equal to M; and
N1 slices are associated with one cell, where N1 is a positive integer less than or equal to N.

Optionally, slices associated with the M1 cells are associated with a same RACH resource.

Optionally, the N1 slices are associated with a same RACH resource.

Optionally, the terminal 500 further includes a measurement module, where
the first receiving module 501 is further configured to receive a handover measurement configuration, where the handover measurement configuration is used to indicate second slice information to be measured;
the measurement module is configured to: in a case that measurement conditions are met, perform measurement based on the handover measurement configuration, and obtain a measurement result; and
the first sending module 502 is further configured to send a measurement report to a network device, where the measurement report carries the measurement result and third slice information, and the third slice information is slice information associated with the measurement result in the second slice information.

Optionally, the second slice information includes any one of the following:
measured slice information;
measured slice information of a first cell; and
measured slice information of a first frequency.

Optionally, the third slice information includes at least one of the following:
slice information of a second cell; and
slice information of a second frequency.

The terminal provided in this embodiment of the present invention can implement the processes implemented by the terminal in the method embodiment in FIG. 2. To avoid repetition, details are not described herein again.

Referring to FIG. 6, FIG. 6 is a structural diagram of a network device according to an embodiment of the present invention. As shown in FIG. 6, a network device 600 includes:
a second sending module 601, configured to send a handover command to a terminal, where the handover command includes first slice information, the first slice information is used to indicate N slices, the N slices are used for the terminal to send a random access request, and N is a positive integer.

Optionally, the handover command further includes an RACH resource associated with each of the N slices.

Optionally, the handover command further includes M cells associated with the N slices, and M is a positive integer.

Optionally, an association relationship between the N slices and the M cells satisfies at least one of the following:
one slice is associated with M1 cells, where M1 is a positive integer less than or equal to M; and
N1 slices are associated with one cell, where N1 is a positive integer less than or equal to N.

Optionally, slices associated with the M1 cells are associated with a same RACH resource.

Optionally, the N1 slices are associated with a same RACH resource.

Optionally, the network device 600 further includes a third receiving module, where
the second sending module 601 is further configured to send a handover measurement configuration to the terminal, where the handover measurement configuration is used to indicate second slice information to be measured; and
the third receiving module is configured to receive a measurement report sent by the terminal based on the handover measurement configuration, where the measurement report carries a measurement result obtained by performing measurement based on the handover measurement configuration and third slice information, and the third slice information is slice information associated with the measurement result in the second slice information.

Optionally, the second slice information includes any one of the following:
measured slice information;
measured slice information of a first cell; and
measured slice information of a first frequency.

Optionally, the third slice information includes at least one of the following:
slice information of a second cell; and
slice information of a second frequency.

Optionally, before the sending a handover command to a terminal, the method further includes:
sending a handover request message to a second network node, where the handover request message carries a part or all of slice information in the third slice information;
receiving a handover request response message sent by the second network node; and
sending a handover command to the terminal in a case that the handover response request message carries fourth slice information, where
the fourth slice information includes slice information that the second network node allows the terminal to access.

Optionally, the fourth slice information includes at least one of the following:
a part or all of slice information in the slice information carried in the handover request message; and
in addition to the slice information carried in the handover request message, slice information recommended by the second network node.

The network device provided in the embodiments of the present invention can implement processes implemented by the network device in the method embodiment of FIG. 3. To avoid repetition, details are not described herein again.

Referring to FIG. 7, FIG. 7 is a structural diagram of a network device according to an embodiment of the present invention. As shown in FIG. 7, a network device 700 includes:
a second receiving module 701, configured to receive a handover request message sent by a first network node, where the handover request message carries a part or all slice information in third slice information, and the third slice information is slice information associated with a measurement result in a measurement report that is sent by a terminal and that is received by the first network node; and
a third sending module 702, configured to send a handover request response message to the second network node, where
in a case that the handover response request message carries fourth slice information, the handover response request message is used to instruct the first network node to send a handover command to the terminal based on the fourth slice information.

Optionally, the fourth slice information includes at least one of the following:
a part or all of slice information in the slice information carried in the handover request message; and
in addition to the slice information carried in the handover request message, slice information recommended by the second network node.

The network device provided in the embodiments of the present invention can implement processes implemented by the network device in the method embodiment of FIG. 4. To avoid repetition, details are not described herein again.

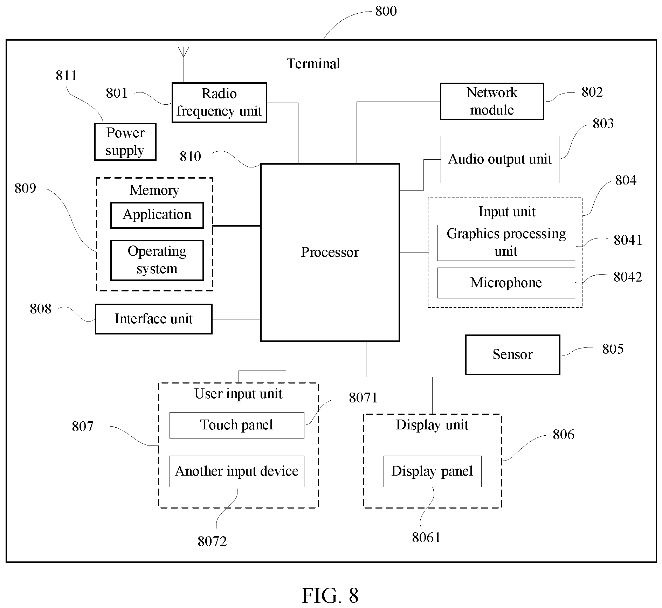

FIG. 8 is a schematic diagram of a hardware structure of a terminal for implementing the embodiments of the present invention. The terminal 800 includes but is not limited to components such as a radio frequency unit 801, a network module 802, an audio output unit 803, an input unit 804, a sensor 805, a display unit 806, a user input unit 807, an interface unit 808, a memory 809, a processor 810, and a power supply 811. It can be understood by a person skilled in the art that, the terminal structure shown in FIG. 8 does not constitute any limitation on the terminal, and the terminal may include more or fewer components than those shown in the figure, or combine some components, or have different component arrangements. In this embodiment of the present invention, the terminal includes but is not limited to a mobile phone, a tablet computer, a laptop computer, a palmtop computer, an in-vehicle terminal, a wearable device, a pedometer, and the like.

The radio frequency unit 801 is configured to: receive a handover command sent by a first network node, where the handover command includes first slice information, the first slice information is used to indicate N slices, and N is a positive integer; and
send a random access request to a target slice of a target cell, where the target slice is one of the N slices.

It should be understood that, in this embodiment, the processor 810 and the radio frequency unit 801 can implement processes implemented by the network in the method embodiment in FIG. 2. To avoid repetition, details are not described herein again.

It should be understood that, in this embodiment of the present invention, the radio frequency unit 801 may be configured to receive and send information or a signal in a call process. Specifically, after receiving downlink data from a base station, the radio frequency unit 801 sends the downlink data to the processor 810 for processing. In addition, the radio frequency unit 801 sends uplink data to the base station. Usually, the radio frequency unit 801 includes but is not limited to an antenna, at least one amplifier, a transceiver, a coupler, a low noise amplifier, a duplexer, and the like. In addition, the radio frequency unit 801 may also communicate with a network and other devices through a wireless communication system.

The terminal provides wireless broadband Internet access for the user by using the network module 802, for example, helping the user to send and receive an e-mail, brows a web page, and access streaming media.

The audio output unit 803 may convert audio data received by the radio frequency unit 801 or the network module 802 or stored in the memory 809 into an audio signal and output the audio signal as a sound. In addition, the audio output unit 803 may further provide an audio output (for example, a call signal received voice, or a message received voice) related to a specific function implemented by the terminal 800. The audio output unit 803 includes a speaker, a buzzer, a telephone receiver, and the like.

The input unit 804 is configured to receive audio or radio frequency signals. The input unit 804 may include a graphics processing unit (Graphics Processing Unit, GPU) 8041 and a microphone 8042. The graphics processing unit 8041 is used to process image data of a static picture or a video obtained by an image capturing device (for example, a camera) in a video capturing mode or an image capturing mode. A processed image frame may be displayed on the display unit 806. The image frame processed by the graphics processing unit 8041 may be stored in the memory 809 (or another storage medium) or sent by using the radio frequency unit 801 or the network module 802. The microphone 8042 may receive sound and can process such sound into audio data. The processed audio data may be converted in a call mode into a format that can be sent by the radio frequency unit 801 to a mobile communication base station for outputting.

The terminal 800 further includes at least one type of sensor 805, such as a light sensor, a motion sensor, and another sensor. Specifically, the light sensor includes an ambient light sensor and a proximity sensor. The ambient light sensor may adjust luminance of the display panel 8061 based on brightness of ambient light. The proximity sensor may turn off the display panel 8061 and/or backlight when the terminal 800 moves to an ear. As a type of the motion sensor, an accelerometer sensor may detect an acceleration value in each direction (generally, three axes), and detect a value and a direction of gravity when the accelerometer sensor is static, and may be used for recognizing a terminal posture (such as screen switching between landscape and portrait modes, a related game, or magnetometer posture calibration), a function related to vibration recognition (such as a pedometer or a knock), and the like. The sensor 805 may further include a fingerprint sensor, a pressure sensor, an iris sensor, a molecular sensor, a gyroscope, a barometer, a hygrometer, a thermometer, an infrared sensor, and the like. Details are not described herein.

The display unit 806 is configured to display information entered by the user or information provided for the user. The display unit 806 may include the display panel 8061, and the display panel 8061 may be configured in a form of a liquid crystal display (Liquid Crystal Display, LCD), an organic light-emitting diode (Organic Light-Emitting Diode, OLED), or the like.

The user input unit 807 may be configured to receive input numeral or character information, and generate key signal input related to user setting and functional control of the terminal. Specifically, the user input unit 807 includes a touch panel 8071 and another input device 8072. The touch panel 8071 is also referred to as a touchscreen, and may collect a touch operation performed by a user on or near the touch panel 8071 (for example, an operation performed by a user on the touch panel 8071 or near the touch panel 8071 by using any proper object or accessory, for example, a finger or a stylus). The touch panel 8071 may include two parts: a touch detection apparatus and a touch controller. The touch detection apparatus detects a touch location of the user, detects a signal carried by a touch operation, and transmits the signal to the touch controller.

The touch controller receives touch information from the touch detection apparatus, converts the touch information to touch point coordinates, sends the touch point coordinates to the processor 810, and receives and executes a command from the processor 810. In addition, the touch panel 8071 may be implemented in various types such as a resistor, a capacitor, an infrared ray, or a surface acoustic wave. The user input unit 807 may include another input device 8072 in addition to the touch panel 8071. Specifically, the other input devices 8072 may include but are not limited to: a physical keyboard, a function key (such as a volume control key, a switch key), a trackball, a mouse, and a joystick. Details are not described herein.

Further, the touch panel 8071 may cover the display panel 8061. When detecting the touch operation on or near the touch panel 8071, the touch panel 8071 transmits the touch operation to the processor 810 to determine a type of a touch event, and then the processor 810 provides corresponding visual output on the display panel 8061 based on the type of the touch event. In FIG. 8, although the touch panel 8071 and the display panel 8061 are used as two independent parts to implement input and output functions of the terminal, in some embodiments, the touch panel 8071 and the display panel 8061 may be integrated to implement the input and output functions of the terminal. This is not specifically limited herein.

The interface unit 808 is an interface for connecting an external apparatus with the terminal 800. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 808 may be configured to receive input (for example, data information and power) from an external apparatus and transmit the received input to one or more elements in the terminal 800 or may be configured to transmit data between the terminal 800 and an external apparatus.

The memory 809 may be configured to store a software program and various data. The memory 809 may mainly include a program storage area and a data storage area. The program storage area may store an operating system, an application program required by at least one function (for example, a sound play function or an image display function), and the like. The data storage area may store data (for example, audio data or an address book) or the like created based on use of a mobile phone. In addition, the memory 809 may include a high-speed random access memory or a nonvolatile memory, for example, at least one disk storage device, a flash memory, or other volatile solid-state storage devices.

The processor 810 is a control center of the terminal, and connects all parts of the entire terminal by using various interfaces and lines. By running or executing a software program and/or a module stored in the memory 809 and invoking data stored in the memory 809, the processor 810 performs various functions of the terminal and data processing, to perform overall monitoring on the terminal. The processor 810 may include one or more processing units. Preferably, the processor 810 may be integrated with an application processor and a modem processor. The application processor mainly processes an operating system, a user interface, an application program, and the like. The modem processor mainly processes wireless communication. It can be understood that, alternatively, the modem processor may not be integrated into the processor 810.

The terminal 800 may further include the power supply 811 (such as a battery) that supplies power to each component. Preferably, the power supply 811 may be logically connected to the processor 810 by using a power management system, so as to implement functions such as charging, discharging, and power consumption management by using the power management system.

In addition, the terminal 800 includes some function modules not shown, and details are not described herein.

Preferably, an embodiment of the present invention further provides a terminal, including a processor 810, a memory 809, and a computer program stored in the memory 809 and executable on the processor 810. When the computer program is executed by the processor 810, each process of the embodiment of the cell handover method is implemented and a same technical effect can be achieved. To avoid repetition, details are not described herein again.

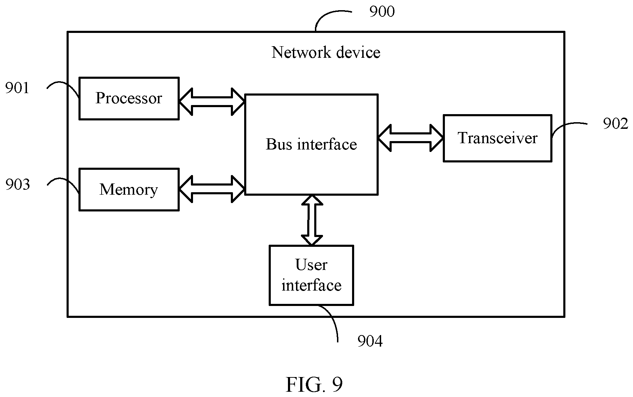

Referring to FIG. 9, FIG. 9 is a structural diagram of another network device according to an embodiment of the present invention. As shown in FIG. 9, the network device 900 includes: a processor 901, a transceiver 902, a memory 903, and a bus interface:

The transceiver 902 is configured to send a handover command to a terminal, where the handover command includes first slice information, the first slice information is used to indicate N slices, the N slices are used for the terminal to send a random access request, and N is a positive integer;
or
the transceiver 902 is configured to: receive a handover request message sent by a first network node, where the handover request message carries a part or all slice information in third slice information, and the third slice information is slice information associated with a measurement result in a measurement report that is sent by a terminal and that is received by the first network node; and send a handover request response message to the second network node, where in a case that the handover response request message carries fourth slice information, the handover response request message is used to instruct the first network node to send a handover command to the terminal based on the fourth slice information.

It should be understood that, in this embodiment, the processor 901 and the transceiver 902 can implement processes implemented by the network device in the method embodiment in FIG. 3 or FIG. 4. To avoid repetition, details are not described herein again.

In FIG. 9, a bus architecture may include any quantity of interconnected buses and bridges, and is specifically linked by various circuits of one or more processors represented by the processor 901 and a memory represented by the memory 903. The bus architecture may further link various other circuits such as a peripheral device, a voltage regulator, and a power management circuit together. These are all well-known in the art, and therefore are not further described in this specification. The bus interface provides interfaces. The transceiver 902 may be a plurality of elements, in other words, includes a transmitter and a receiver, and provides a unit configured to communicate with various other apparatuses on a transmission medium. For different user equipment, the user interface 904 may be further an interface capable of connecting externally and internally a required device. The connected device includes, but is not limited to, a keypad, a display, a speaker, a microphone, a joystick, and the like.

The processor 901 is responsible for managing the bus architecture and common processing, and the memory 903 may store data used when the processor 901 performs an operation.

Preferably, an embodiment of the present invention further provides a network device, including a processor 901, a memory 903, and a computer program stored in the memory 903 and executable on the processor 901. When the computer program is executed by the processor 901, each process of the embodiment of the foregoing cell handover processing method can be implemented, and a same technical effect can be achieved. To avoid repetition, details are not described herein again.

An embodiment of the present invention further provides a computer-readable storage medium. A computer program is stored in the computer-readable storage medium. When the computer program is executed by a processor, each process of the embodiment of the cell handover processing method on a network device side provided in the embodiments of the present invention is implemented, or when the computer program is executed by a processor, each process of the embodiment of the cell handover method on a terminal side provided in the embodiments of the present invention is implemented, and a same technical effect can be achieved. To avoid repetition, details are not described herein again. The computer-readable storage medium includes a read-only memory (Read-only Memory, ROM), a random access memory (Random Access Memory, RAM), a magnetic disk, or an optical disc.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. Without more restrictions, an element defined by the statement "including a..." does not exclude another same element in this process, method, article, or apparatus that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of the present invention essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the method described in the embodiments of the present invention.

The embodiments of the present invention are described above with reference to the accompanying drawings, but the present invention is not limited to the above specific implementations. The above specific implementations are merely exemplary instead of restrictive. Under enlightenment of the present invention, a person of ordinary skill in the art may make many forms without departing from the objective of the present invention and the protection scope of claims, all of which fall within the protection of the present invention.

## Claims

1. A cell handover method, applied to a terminal and comprising:
receiving a handover command sent by a first network node, wherein the handover command comprises first slice information, the first slice information is used to indicate N slices, and N is a positive integer; and
sending a random access request to a target slice of a target cell, wherein the target slice is one of the N slices.

2. The method according to claim 1, wherein the handover command further comprises a random access channel (RACH) resource associated with each of the N slices.

3. The method according to claim 2, wherein the sending a random access request to a target slice of a target cell comprises:
sending the random access request to the target slice of the target cell based on an RACH resource associated with the target slice.

4. The method according to claim 1, wherein the handover command further comprises M cells associated with the N slices, the target cell is one of the M cells, and M is a positive integer.

5. The method according to claim 4, wherein an association relationship between the N slices and the M cells satisfies at least one of the following:
one slice is associated with M1 cells, wherein M1 is a positive integer less than or equal to M; and
N1 slices are associated with one cell, wherein N1 is a positive integer less than or equal to N.

6. The method according to claim 5, wherein slices associated with the M1 cells are associated with a same RACH resource.

7. The method according to claim 5, wherein the N1 slices are associated with a same RACH resource.

8. The method according to claim 1, wherein before the receiving a handover command sent by a first network node, the method further comprises:
receiving a handover measurement configuration, wherein the handover measurement configuration is used to indicate second slice information to be measured;
in a case that measurement conditions are met, performing measurement based on the handover measurement configuration, and obtaining a measurement result; and
sending a measurement report to a network device, wherein the measurement report carries the measurement result and third slice information, and the third slice information is slice information associated with the measurement result in the second slice information.

9. The method according to claim 8, wherein the second slice information comprises any one of the followings:
measured slice information;
measured slice information of a first cell; and
measured slice information of a first frequency.

10. The method according to claim 9, wherein the third slice information comprises at least one of the followings:
slice information of a second cell; and
slice information of a second frequency.

11. A cell handover processing method, applied to a first network node and comprising:
sending a handover command to a terminal, wherein the handover command comprises first slice information, the first slice information is used to indicate N slices, the N slices are used for the terminal to send a random access request, and N is a positive integer.

12. The method according to claim 11, wherein the handover command further comprises an RACH resource associated with each of the N slices.

13. The method according to claim 11, wherein the handover command further comprises M cells associated with the N slices, and M is a positive integer.

14. The method according to claim 13, wherein an association relationship between the N slices and the M cells satisfies at least one of the following:
one slice is associated with M1 cells, wherein M1 is a positive integer less than or equal to M; and
N1 slices are associated with one cell, wherein N1 is a positive integer less than or equal to N.

15. The method according to claim 14, wherein slices associated with the M1 cells are associated with a same RACH resource.

16. The method according to claim 14, wherein the N1 slices are associated with a same RACH resource.

17. The method according to claim 11, wherein before the sending a handover command to a terminal, the method further comprises:
sending a handover measurement configuration to the terminal, wherein the handover measurement configuration is used to indicate second slice information to be measured; and
receiving a measurement report sent by the terminal based on the handover measurement configuration, wherein the measurement report carries a measurement result obtained by performing measurement based on the handover measurement configuration and third slice information, and the third slice information is slice information associated with the measurement result in the second slice information.

18. The method according to claim 17, wherein the second slice information comprises any one of the followings:
measured slice information;
measured slice information of a first cell; and
measured slice information of a first frequency.

19. The method according to claim 17, wherein the third slice information comprises at least one of the followings:
slice information of a second cell; and
slice information of a second frequency.

20. The method according to claim 17, wherein before the sending a handover command to a terminal, the method further comprises:
sending a handover request message to a second network node, wherein the handover request message carries a part or all of slice information in the third slice information;
receiving a handover request response message sent by the second network node; and
sending a handover command to the terminal in a case that the handover response request message carries fourth slice information, wherein
the fourth slice information comprises slice information that the second network node allows the terminal to access.

21. The method according to claim 20, wherein the fourth slice information comprises at least one of the followings:
a part or all of slice information in the slice information carried in the handover request message; and
in addition to the slice information carried in the handover request message, slice information recommended by the second network node.

22. A cell handover processing method, applied to a second network node and comprising:
receiving a handover request message sent by a first network node, wherein the handover request message carries a part or all slice information in third slice information, and the third slice information is slice information associated with a measurement result in a measurement report that is sent by a terminal and that is received by the first network node; and
sending a handover request response message to the second network node, wherein
in a case that the handover response request message carries fourth slice information, the handover response request message is used to instruct the first network node to send a handover command to the terminal based on the fourth slice information.

23. The method according to claim 22, wherein the fourth slice information comprises at least one of the followings:
a part or all of slice information in the slice information carried in the handover request message; and
in addition to the slice information carried in the handover request message, slice information recommended by the second network node.

24. A terminal, comprising:
a first receiving module, configured to receive a handover command sent by a first network node, wherein the handover command comprises first slice information, the first slice information is used to indicate N slices, and N is a positive integer; and
a first sending module, configured to send a random access request to a target slice of a target cell, wherein the target slice is one of the N slices.

25. The terminal according to claim 24, wherein the handover command further comprises a random access channel (RACH) resource associated with each of the N slices.

26. The terminal according to claim 25, wherein the first sending module is configured to send the random access request to the target slice of the target cell based on an RACH resource associated with the target slice.

27. The terminal according to claim 24, wherein the handover command further comprises M cells associated with the N slices, the target cell is one of the M cells, and M is a positive integer.

28. A network device, wherein the network device is a first network node, and comprises:
a second sending module, configured to send a handover command to a terminal, wherein the handover command comprises first slice information, the first slice information is used to indicate N slices, the N slices are used for the terminal to send a random access request, and N is a positive integer.

29. The network device according to claim 28, wherein the handover command further comprises an RACH resource associated with each of the N slices.

30. The network device according to claim 28, wherein the handover command further comprises M cells associated with the N slices, and M is a positive integer.

31. The network device according to claim 30, wherein an association relationship between the N slices and the M cells satisfies at least one of the following:
one slice is associated with M1 cells, wherein M1 is a positive integer less than or equal to M; and
N1 slices are associated with one cell, wherein N1 is a positive integer less than or equal to N.

32. A network device, wherein the network device is a second network node, and comprises:
a second receiving module, configured to receive a handover request message sent by a first network node, wherein the handover request message carries a part or all slice information in third slice information, and the third slice information is slice information associated with a measurement result in a measurement report that is sent by a terminal and that is received by the first network node; and
a third sending module, configured to send a handover request response message to the second network node, wherein
in a case that the handover response request message carries fourth slice information, the handover response request message is used to instruct the first network node to send a handover command to the terminal based on the fourth slice information.

33. The network device according to claim 32, wherein the fourth slice information comprises at least one of the followings:
a part or all of slice information in the slice information carried in the handover request message; and
in addition to the slice information carried in the handover request message, slice information recommended by the second network node.

34. A terminal, comprising a memory, a processor, and a program stored in the memory and executable on the processor, wherein when the program is executed by the processor, steps of the cell handover method according to any one of claims 1 to 10 are implemented.

35. A network device, comprising a memory, a processor, and a program stored in the memory and executable on the processor, wherein when the program is executed by the processor, steps of the cell handover processing method according to any one of claims 11 to 23 are implemented.

36. A computer-readable storage medium, wherein the computer-readable storage medium stores a computer program, and when the computer program is executed by a processor, steps of the cell handover method according to any one of claims 1 to 10 are implemented, or when the computer program is executed by a processor, steps of the cell handover processing method according to any one of claims 11 to 23 are implemented.
